# EUROPEAN PATENT APPLICATION

(11) **EP 4 502 283 A1**
(43) Date of publication of application: **05.02.2025**
(21) Application number: 23779382.3
(22) Date of filing: 09.03.2023
(51) Int. Cl.: E02F 9/00

(54) **SHOVEL MANAGEMENT SYSTEM, SHOVEL MANAGEMENT METHOD, AND PROGRAM**

(30) Priority: 31.03.2022 JP 2022061038
(71) Applicant: Sumitomo Construction Machinery Co., Ltd., Tokyo 141-6025 (JP)
(72) Inventor: HASHIMOTO, Kazutoshi, Chiba-shi, Chiba 263-0001 (JP); INOKUMA, Hiroshi, Chiba-shi, Chiba 263-0001 (JP); YOSHIDA, Kazuhiro, Chiba-shi, Chiba 263-0001 (JP)
(74) Representative: Louis Pöhlau Lohrentz
(86) International application number: PCT/JP2023/009063
(87) International publication number: WO 2023/189355

(57) **Abstract**

An excavator management system includes: an excavator on which a first predetermined image is affixed; an assisting device for the excavator; and a management device for the excavator. In this excavator management system, the assisting device includes a communication control part configured to transmit machine identification information of the excavator and part identification information of a part of the excavator in association with each other, to the management device, the machine identification information being read from the first predetermined image and the part identification information being read from a second predetermined image affixed to the part, and the management device includes a storage part configured to store the machine identification information and the part identification information in association with each other.

## Description

### Technical Field

The present disclosure relates to an excavator management system, an excavator management method, and a recording medium.

### Background Art

There are techniques whereby, when maintenance is performed on construction machinery or the like, worn parts are replaced and maintenance information indicating that maintenance has been performed is input into a computer installed at the work site, after which the time for the next maintenance is determined using the input maintenance information.

### Citation List

### Patent Document

Patent Document 1: Unexamined Japanese Patent Application Publication No. 11-36381

### Summary of Invention

### Technical Problem

According to the above-mentioned existing technology, after maintenance to replace parts is performed, the user must input information about the maintenance into a computer installed at the work site or the like, and the input process is generally bothersome.

In view of the foregoing, an object of the present invention is to make input easier.

### Solution to Problem

According to an embodiment of the present disclosure, an excavator management system includes: an excavator on which a first predetermined image is affixed; an assisting device for the excavator; and a management device for the excavator. In this excavator management system, the assisting device includes a communication control part configured to transmit machine identification information of the excavator and part identification information of a part of the excavator in association with each other, to the management device, the machine identification information being read from the first predetermined image and the part identification information being read from a second predetermined image affixed to the part, and the management device includes a storage part configured to store the machine identification information and the part identification information in association with each other.

According to an embodiment of the present disclosure, an excavator management method is implemented by an excavator management system including: an excavator on which a first predetermined image is affixed; an assisting device for the excavator; and a management device for the excavator, the method including controlling the assisting device to transmit machine identification information of the excavator and part identification information of a part of the excavator in association with each other, to the management device, the machine identification information being read from the first predetermined image and the part identification information being read from a second predetermined image affixed to the part, and controlling the management device to store the machine identification information and the part identification information in association with each other.

According to an embodiment of the present disclosure, a computer-readable non-transitory recording medium stores instructions that, when executed by a computer, cause the computer to perform the excavator management method described above.

### Advantageous Effects of Invention

The present disclosure makes input easier.

### Brief Description of Drawings

[FIG. 1] FIG. 1 is a diagram that shows an example system structure of an excavator management system;
[FIG. 2A] FIG. 2A is a diagram that shows a side view of an excavator;
[FIG. 2B] FIG. 2B is a schematic view of the interior of a housing in an upper rotating body;
[FIG. 3] FIG. 3 is a diagram that shows an example hardware structure of a management device;
[FIG. 4] FIG. 4 is a diagram for explaining the functions of the devices in the management system;
[FIG. 5] FIG. 5 is a sequence diagram for explaining the operation of the management system according to a first embodiment;
[FIG. 6A] FIG. 6A is a first diagram that shows an example of display on an assisting device according to the first embodiment;
[FIG. 6B] FIG. 6B is a second diagram that shows an example of display on the assisting device according to the first embodiment;
[FIG. 6C] FIG. 6C is a third diagram that shows an example of display on the assisting device according to the first embodiment;
[FIG. 7] FIG. 7 is a diagram for explaining an example of display on a management device;
[FIG. 8] FIG. 8 is a sequence diagram for explaining the operation of the management system according to a second embodiment;
[FIG. 9A] FIG. 9A is a first diagram that shows an example of display on an assisting device according to the second embodiment;
[FIG. 9B] FIG. 9B is a second diagram that shows an example of display on the assisting device according to the second embodiment; and
[FIG. 9C] FIG. 9C is a third diagram that shows an example of display on the assisting device according to the second embodiment.

### Description of Embodiments

### (First embodiment)

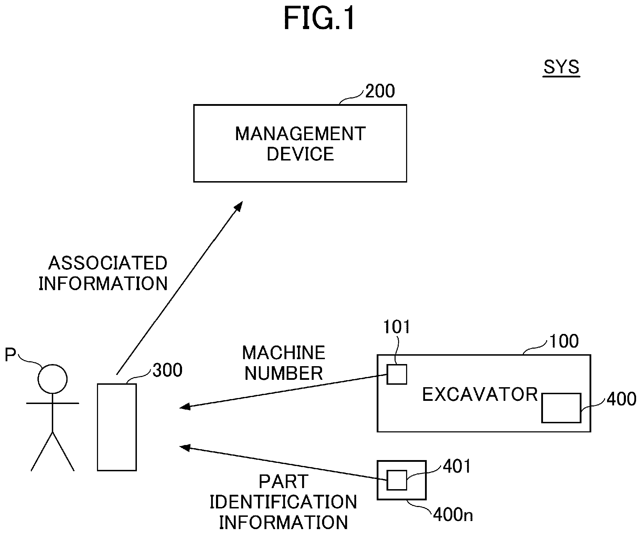

A first embodiment of the present disclosure will be described below with reference to the drawings. FIG. 1 shows an example system structure of an excavator management system.

The excavator management system SYS of the present embodiment includes: an excavator 100; a management device 200 for the excavator 100; an assisting device 300 for the excavator 100; and a part 400 of the excavator 100. In the following description, the excavator management system SYS will be referred to as "management system SYS."

In the management system SYS, the excavator 100, the management device 200, and the assisting device 300 are connected with each other via a network and can communicate with each other.

The management device 200 receives operation information from the excavator 100 and manages the state of the excavator 100.

The assisting device 300 assists, for example, an operator who operates the excavator 100. To be more specific, the assisting device 300 receives various pieces of information from the management device 200 and the like and displays the information on a screen, thereby providing the information to the operator. The assisting device 300 may be used, for example, by a service person P who performs maintenance on the excavator 100.

The part 400 of the present embodiment is a type of part installed in the excavator 100. FIG. 1 illustrates a case in which the part 400 installed in the excavator 100 is replaced with a new part 400n by a service person P.

According to the present embodiment, a two-dimensional code including identification information for identifying the excavator 100 is affixed to the excavator 100 and a two-dimensional code including identification information for identifying the part 400n is affixed to the part 400n.

According to the present embodiment, affixing a two-dimensional code to the body of the excavator 100 means physically associating the body of the excavator 100 and the two-dimensional code with each other by a method such as attaching a sticker with a two-dimensional code printed on it to the body of the excavator 100, forming an image showing a two-dimensional code on the surface of the body of the excavator 100, and so forth. According to the present embodiment, the body of the excavator 100 and the two-dimensional code are physically associated with each other, so that, in the management system SYS, the identification information contained in the two-dimensional code that is physically associated with the excavator 100 can be used as identification information for identifying the excavator 100.

Also, affixing a two-dimensional code to the part 400n means physically associating the part 400n and a two-dimensional code with each other by, for example, attaching a sticker with a two-dimensional code printed on it to the part 400n directly or to the packaging material in which the part 400n is packaged, or by forming an image showing a two-dimensional code, on the surface of the part 400n or on the packaging material in which the part 400n is packaged. According to the present embodiment, the part 400n and a two-dimensional code are thus physically associated with each other, so that, in the management system SYS, the identification information contained in the two-dimensional code can be used as part identification information for identifying the part 400n.

Also, the two-dimensional code according to the present embodiment may be, for example, a predetermined image linked to specific information. The specific information may include a machine number for identifying the excavator 100, part identification information for identifying the part 400n, and so forth. Also, the specific information may be information that is uploaded to the assisting device 300 when an image capturing function or the like of the assisting device 300 recognizes a predetermined image. A barcode, a QR code (registered trademark), an icon image, and a three-dimensional code may be examples of the predetermined image.

According to the present embodiment, when the part 400 of the excavator 100 is replaced with the part 400n, the assisting device 300 reads the two-dimensional code of the excavator 100 and the two-dimensional code of the part 400n. The assisting device 300 reads these two two-dimensional codes, associates the pieces of information read from the respective two-dimensional codes with each other, and transmits the associated information to the management device 200.

The operation of the management system SYS of the present embodiment will be described in greater detail below.

According to the present embodiment, a two-dimensional code 101 includes a machine number, which is identification information for identifying the excavator 100, and is affixed to the body of the excavator 100. Also, according to the present embodiment, a two-dimensional code 401 including part identification information for identifying the part 400n may be affixed to the part 400n or to the packaging material in which the part 400n is packaged.

In the example of FIG. 1, a service person P carrying an assisting device 300 with him/her brings a new part 400n to the work site and attaches it to the excavator 100. The assisting device 300 is a terminal having an image capturing device and having a function to read two-dimensional codes.

Here, when the service person P holds the assisting device 300 over the two-dimensional code 101 of the excavator 100, the assisting device 300 reads the machine number of the excavator 100 from the two-dimensional code 101. Also, when the service person P holds the assisting device 300 over the two-dimensional code 401 of the part 400n, the assisting device 300 reads the part identification information of the part 400n from the two-dimensional code 401.

In other words, the two-dimensional code 101 associates the excavator 100 with specific information (a machine number) that is linked to the two-dimensional code 101, and is a first predetermined image. Also, the two-dimensional code 401 associates the part 400n with specific information (part identification information) that is linked to the two-dimensional code 401, and is a second predetermined image.

The assisting device 300 of the present embodiment, upon reading the machine number of the excavator 100 and the part identification information of the part 400n, prepares associated information, in which these pieces of information are associated with each other, and transmits the associated information to the management device 200.

Thus, according to the present embodiment, when the service person P replaces a part of an excavator, he/she can notify the management device 200 of information identifying the excavator whose part has been replaced and identifying the replacement part by simply holding the assisting device 300 over the two-dimensional code 101 of the excavator 100 and the two-dimensional code 401 of the part 400n.

By this means, according to the present embodiment, the service person P does not have to input maintenance information indicating that the part 400n has been used as a replacement, into the management device 200, by manual input or the like, and can input information indicating that maintenance has been performed, into the management device 200, with ease.

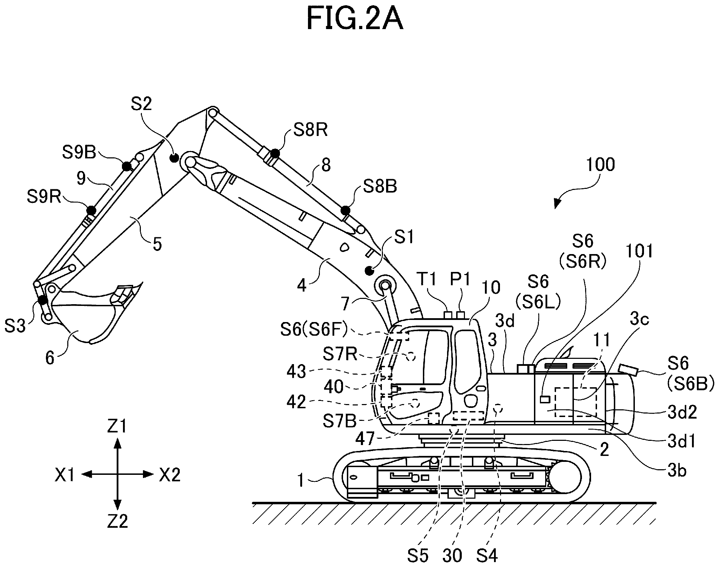

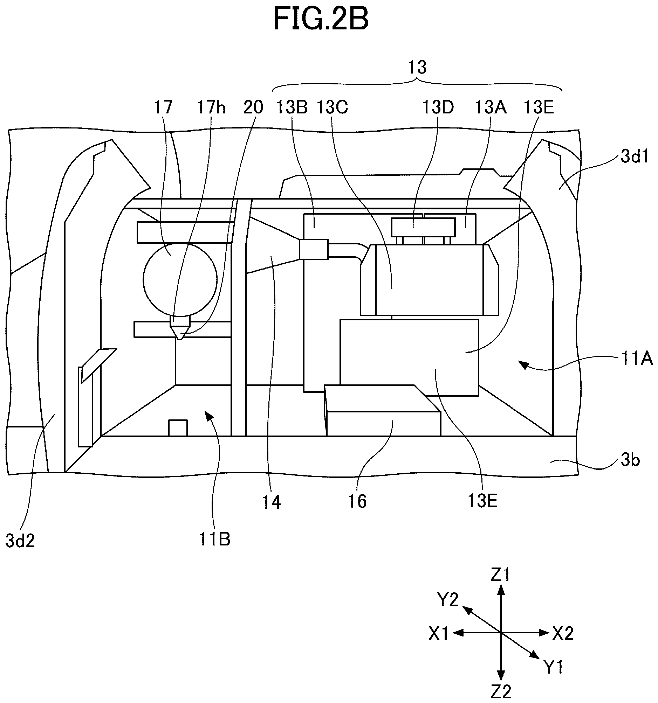

The structure of the excavator 100 according to the present embodiment will be described below with reference to FIG. 2A and FIG. 2B. FIG. 2A shows a side view of the excavator 100. Note that, in the accompanying drawings, the X-axis, the Y-axis, and the Z-axis are orthogonal to each other. To be more specific, the X-axis extends along the front-back axis of the excavator 100, the Y axis extends along the left-right axis of the excavator 100, and the Z-axis extends along the rotating axis of the excavator 100. According to the present embodiment, the X and Y axes extend horizontally, and the Z axis extends vertically.

The excavator 100 has a lower traveling body 1, a rotating mechanism 2, and an upper rotating body 3. In the excavator 100, the upper rotating body 3 is rotatably mounted on the lower traveling body 1 via the rotating mechanism 2. A boom 4 is attached to the upper rotating body 3. An arm 5 is attached to the tip of the boom 4, and a bucket 6 is attached to the tip of the arm 5 as an end attachment.

The boom 4, the arm 5, and the bucket 6 constitute an excavating attachment, which is an example of an attachment. The boom 4 is driven by a boom cylinder 7, the arm 5 is driven by an arm cylinder 8, and the bucket 6 is driven by a bucket cylinder 9. A boom angle sensor S1 is attached to the boom 4, an arm angle sensor S2 is attached to the arm 5, and a bucket angle sensor S3 is attached to the bucket 6.

The boom angle sensor S1 is structured to detect the rotation angle of the boom 4. According to the present embodiment, the boom angle sensor S1 is an acceleration sensor and can detect the rotation angle of the boom 4 relative to the upper rotating body 3 (hereinafter referred to as "boom angle"). For example, the boom angle is smallest when the boom 4 is lowered to its lowest position, and increases as the boom 4 is raised upward.

The arm angle sensor S2 is structured to detect the rotation angle of the arm 5. According to the present embodiment, the arm angle sensor S2 is an acceleration sensor and can detect the rotation angle of the arm 5 relative to the boom 4 (hereinafter referred to as "arm angle"). For example, the arm angle is smallest when the arm 5 is folded completely and increases as the arm 5 opens.

The bucket angle sensor S3 is structured to detect the rotation angle of the bucket 6**.** According to the present embodiment, the bucket angle sensor S3 is an acceleration sensor and can detect the rotation angle of the bucket 6 relative to the arm 5 (hereinafter referred to as "bucket angle"). For example, the bucket angle is smallest when the bucket 6 is folded completely and increases as the bucket 6 opens.

Each of the boom angle sensor S1, the arm angle sensor S2, and the bucket angle sensor S3 may be, for example, a potentiometer using a variable resistor, a stroke sensor that detects the stroke of a corresponding hydraulic cylinder, a rotary encoder that detects the rotation angle about a linking pin, a gyro sensor, a combination of an acceleration sensor and a gyro sensor, and so on.

A boom-rod pressure sensor S7R and a boom-bottom pressure sensor S11B are attached to the boom cylinder 7. An arm-rod pressure sensor S8R and an arm-bottom pressure sensor S8B are attached to the arm cylinder 8.

A bucket-rod pressure sensor S9R and a bucket-bottom pressure sensor S9B are attached to the bucket cylinder 9. The boom-rod pressure sensor S7R, the boom-bottom pressure sensor S11B, the arm-rod pressure sensor S8R, the arm-bottom pressure sensor S8B, the bucket-rod pressure sensor S9R, and the bucket-bottom pressure sensor S9B may also be collectively referred to as "cylinder pressure sensors."

The boom-rod pressure sensor S7R detects the pressure in the rod-side oil chamber of the boom cylinder 7 (hereinafter referred to as "boom-rod pressure"), and the boom-bottom pressure sensor S11B detects the pressure in the bottom-side oil chamber of the boom cylinder 7 (hereinafter referred to as "boom-bottom pressure"). The arm-rod pressure sensor S8R detects the pressure in the rod-side oil chamber of the arm cylinder 8 (hereinafter referred to as "arm-rod pressure"), and the arm-bottom pressure sensor S8B detects the pressure in the bottom-side oil chamber of the arm cylinder 8 (hereinafter referred to as "arm-bottom pressure") .

The bucket-rod pressure sensor S9R detects the pressure in the rod-side oil chamber of the bucket cylinder 9 (hereinafter referred to as "bucket-rod pressure"), and the bucket-bottom pressure sensor S9B detects the pressure in the bottom-side oil chamber of the bucket cylinder 9 (hereinafter referred to as "bucket-bottom pressure."

The upper rotating body 3 is provided with a cabin 10 which is the operator's room, and is equipped with power sources such as an engine 11. Furthermore, a sensor for detecting the amount of CO₂ emissions may be provided near the exhaust mechanism of the engine 11.

Also, the upper rotating body 3 includes a rotating frame 3b, a housing frame 3c, a housing cover 3d, and so forth. The cabin 10 is located in a left front portion on the upper rotating body 3. The rotating frame 3b forms the bottom part of the upper rotating body 3 and supports the cabin 10 and the like. Above the rotating frame 3b, the housing frame 3c constitutes the framework of the housing part that is positioned at the rear of the cabin 10. The housing cover 3d constitutes the outer shell of the upper surface and side surfaces of the housing part.

Also, the housing cover 3d has open/close covers 3d1 and 3d2 on its left side surface. By opening the open/close covers 3d1 and 3d2, the user (the operator, service person, worker, etc.) can access the engine room 11A, in which the engine 11 is placed, and the left portion of the air cleaner room 11B (see FIG. 2B).

According to the present embodiment, a two-dimensional code 101 is attached to the open/close cover 3d1. Note that the location where the two-dimensional code 101 is attached is not limited to the open/close cover 3d1. The two-dimensional code 101 may be provided at any position on the excavator 100 as long as the assisting device 300 can read it.

In addition, attached to the upper rotating body 3 are a controller 30, a display device 40, an input device 42, a sound output device 43, a storage device 47, a positioning device P1, a body angle sensor S4, a rotating angular velocity sensor S5, image capturing devices S6, and a communication device T1.

The upper rotating body 3 may also be equipped with a battery part that supplies electric power, an electric motor generator that generates electricity using the rotating/driving force of the engine 11, and so forth. The battery part is, for example, a capacitor or a lithium ion battery. The electric motor generator may function as an electric motor and drive mechanical loads, or function as an electric generator and supply power to electrical loads.

The controller 30 functions as the main control part that drives and controls the excavator 100. According to the present embodiment, the controller 30 is configured as a computer including a CPU, RAM, ROM, and the like. Various functions of the controller 30 are implemented, for example, as the CPU runs programs stored in the ROM. These functions may include, for example, at least one of a machine guidance function to guide the operator in operating the excavator 100 manually, a machine control function to automatically assist the operator in operating the excavator 100 manually, and so forth.

The display device 40 is structured to display various pieces of information. The display device 40 may be connected to the controller 30 via a communication network such as a CAN, or may be connected to the controller 30 via a dedicated line.

The input device 42 is structured to allow the operator to input various pieces of information into the controller 30. The input device 42 includes at least one of a touch panel, a knob switch, a membrane switch, and the like, installed inside the cabin 10.

The sound output device 43 is structured to output sound. The sound output device 43 may be, for example, an in-vehicle speaker that is connected to the controller 30, or may be an alarm such as a buzzer. According to the present embodiment, the sound output device 43 is structured to output various pieces of information through sound in response to sound output commands from the controller 30.

The storage device 47 is structured to store various pieces of information. The storage device 47 is, for example, a non-volatile storage medium such as a semiconductor memory. The storage device 47 may store information that is output from various devices while the excavator 100 is operating, or store information that is acquired via various devices before the excavator 100 starts operating.

The storage device 47 may store data about a target working surface, acquired via the communication device T1, for example. The target working surface may be set by the operator of the excavator 100, or may be set by a construction manager or the like.

The positioning device P1 is structured to measure the position of the upper rotating body 3. The positioning device P1 may be structured such that the orientation of the upper rotating body 3 can be measured. According to the present embodiment, the positioning device P1 is, for example, a GNSS compass that detects the position and orientation of the upper rotating body 3 and outputs the detected values to the controller 30. Therefore, the positioning device P1 can also function as an orientation detection device to detect the orientation of the upper rotating body 3. The orientation detection device may be an orientation sensor attached to the upper rotating body 3.

The body angle sensor S4 is structured to detect the inclination of the upper rotating body 3. According to the present embodiment, the body angle sensor S4 is an acceleration sensor that detects the front-back tilting angle about the front-back axis and the left-right tilting angle about the left-right axis of the upper rotating body 3, relative to a virtual lateral plane. The front-back axis and the left-right axis of the upper rotating body 3 are orthogonal to each other at, for example, the excavator's point of center, which is a point on the rotating axis of the excavator 100.

The rotating angular velocity sensor S5 is structured to detect the rotating angular velocity of the upper rotating body 3. The rotating angular velocity sensor S5 may be structured to detect or calculate the rotating angle of the upper rotating body 3. According to the present embodiment, the rotating angular velocity sensor S5 is a gyro sensor. The rotating angular velocity sensor S5 may also be a resolver, a rotary encoder, or the like.

The image capturing devices S6 are an example of space recognition devices and are structured to capture images of the surroundings of the excavator 100. According to the present embodiment, the image capturing devices S6 include a front camera S6F that captures images of the space in front of the excavator 100, a left camera S6L that captures images of the space to the left of the excavator 100, a right camera S6R that captures images of the space to the right of the excavator 100, and a rear camera S6B that captures images of the space behind the excavator 100.

Each image capturing device S6 is, for example, a monocular camera having an image capturing element such as a CCD or CMOS, and outputs the captured images to the display device 40. The image capturing devices S6 may be stereo cameras, depth image cameras, etc. Also, the image capturing devices S6 may be replaced with other space recognition devices including a three-dimensional depth image sensor, an ultrasonic sensor, a millimeter wave radar, a LIDAR, an infrared sensor, and so forth, or may be replaced with a combination of other space recognition devices and cameras.

The front camera S6F is attached to, for example, the inner ceiling of the cabin 10, that is, inside the cabin 10. However, the front camera S6F may be attached to the outside of the cabin 10, such as the outer roof of the cabin 10 or the side surface of the boom 4. The left camera S6L is attached to a left edge of the upper surface of the upper rotating body 3. The right camera S6R is attached to a right edge of the upper surface of the upper rotating body 3. The rear camera S6B is attached to a rear edge of the upper surface of the upper rotating body 3.

The communication device T1 is structured to control communication with external devices located outside the excavator 100. According to the present embodiment, the communication device T1 controls communication with external devices via a satellite communication network, a mobile telephone communication network, the Internet, and so forth. The external devices may include, for example, a management device 200 such as a server installed in an external facility, or an assisting device 300 such as a smartphone that a worker near the excavator 100 carries with him/her.

FIG. 2B is a schematic diagram of the interior of the housing in the upper rotating body. To be more specific, FIG. 2B is a left side view of the upper rotating body 3 with both open/close covers 3d1 and 3d2 open.

The engine room 11A is provided in a rear portion of the upper rotating body 3, extending from a left-edge portion to a right-edge portion. In the engine room 11A, a diesel engine (hereinafter simply referred to as an "engine") 11, a cooling fan (not shown), a heat exchanger unit 13, a turbocharger 14, an exhaust gas processing device (not shown), a battery 16, and so forth are installed. To be more specific, the engine 11 is placed in the center portion of the engine room 11A in the right-left direction. Also, a cooling fan that is driven by the engine 11's power is installed in a left-edge portion (Y1 edge) of the engine 11.

In addition, a turbocharger 14 is attached to the front surface (X1 side surface) of the engine 11. Also, an exhaust gas processing device is installed to the right (Y2 direction) of the engine 11, that is, in a right-edge portion of the engine room 11A.

Also, to the left (Y1 direction) of the cooling fan, a heat exchanger unit 13 including a radiator 13A, an oil cooler 13B, an intercooler 13C, a fuel cooler 13D, an air-conditioner condenser 13E, and so forth is installed. Also, a battery 16 is positioned to the left (Y1 direction) of the heat exchanger unit 13, that is, in a left-edge portion of the engine room 11A.

Furthermore, at least portions of the heat exchanger unit 13 and the battery 16 are arranged so as to be visible from the left side of the upper rotating body 3 when the open/close cover 3d1 is open.

The air cleaner room 11B is provided on the left side of the upper rotating body 3, adjacent to the front of the left part of the engine room 11A. An air cleaner 17 and the like are installed in the air cleaner room 11B. Also, the cabin 10 is in front of the air cleaner room 11B (in the X1 direction).

The air cleaner 17 filters the air introduced into the engine 11 via the turbocharger 14. The air cleaner 17 is positioned in the upper space of the air cleaner room 11B. The air cleaner 17 takes in air through an air inlet portion formed on the outer periphery. The air taken inside moves to the left (Y1 direction), forming a weak spiral flow around a cylindrical filter, that is, an outer element and an inner element (not shown). During this process, centrifugal force acts on relatively heavy dust particles (hereinafter referred to as "heavy dust") in the air, separating heavy dust from the air.

To be more specific, the heavy dust in the spiral flow is pressed against the inner wall of the body of the air cleaner 17, travels along the inner wall, and is collected in a vacuator valve 20 through a dust outlet 17h, which will be described later. The heavy dust collected in the vacuator valve 20 is discharged downward when the vacuator valve 20 opens. On the other hand, air containing relatively light dust (hereinafter referred to as "light dust") in the spiral flow passes through the outer element and the inner element, and enters the inner element. At this time, light dust in the air is caught by (filtered out by) the outer element and the inner element. The air that has entered the inner element is discharged through the air exhaust part and is supplied to the centrifugal compressor of the turbocharger 14.

Also, an air cleaner 17 is positioned so as to be visible from the left side of the upper rotating body 3 when the open/close cover 3d2 is open.

Air taken in through the air cleaner 17 is compressed by the compressor of the turbocharger 14, cooled by an intercooler 13 C, and reaches the combustion chamber of the engine 11. In addition, the exhaust gas discharged from the engine 11 rotates the turbine of the turbocharger 14 and is purified by an exhaust gas processing device before being released into the atmosphere from an exhaust port. The exhaust gas processing device may include a selective catalytic reduction (SCR) system, a diesel particulate filter (DPF), and so forth. Also, it is not necessarily required to provide the exhaust gas processing device 15. Instead, a muffler (silencer) having only a silencing function and no purification function may be provided.

A sensor for detecting intake pressure is provided downstream of the air cleaner 17, that is, in the intake pipe between the air cleaner 17 and the turbocharger 14. The sensor's detected values are transmitted to the controller 30, which controls the operation of the excavator 100. This enables the controller 30 to detect, for example, a drop in intake pressure caused by an anomaly in the air cleaner 17 (for example, clogging of the outer element clogged). To be more specific, when the detection value of the sensor falls below a predetermined threshold, the controller 30 determines that an anomaly has occurred in the air cleaner 17 and reports this to the user. For example, the controller 30 can display an indicator on the display device 40 provided in the cabin 10 to inform the operator of the excavator 100 of an anomaly in the air cleaner 17 and prompt the operator to take an appropriate action (replace or clean the outer element, for example) .

Note that, instead of a sensor, a mechanical indicator may be provided at the same position (where the intake pipe between the air cleaner 17 and the turbocharger 14 is provided). For example, an indicator, the display position of which changes mechanically depending on the behavior of an elastic material or the like in accordance with the pressure inside the intake pipe, that is visible from outside the intake pipe may be provided, so that the user can check the anomaly of the air cleaner 17 (clogging of the outer element, etc.) by opening the open/close cover 3d2 and visually checking the position of the indicator.

The part 400 according to the present embodiment may be, for example, the outer element of the air cleaner 17. According to the present embodiment, for example, when an anomaly in the air cleaner 17 (clogging of the outer element, etc.) is reported to the operator of the excavator 100, an operation is performed to replace the outer element (the part 400) causing the clogging or the like with a new outer element (the part 400n).

When this takes place, according to the present embodiment, the two-dimensional code 401 affixed to the packaging material of the new replacement outer element (the part 400n) and the two-dimensional code 101 provided on the open/close cover 3d1 of the excavator 100 are read by the assisting device 300 of the service person P who performs the replacement job.

Then, the assisting device 300 acquires the part identification information of the new outer element (the part 400n) from the two-dimensional code 401, obtains the machine number of the excavator 100 from the two-dimensional code 101, associates these, and transmits the associated information to the management device 200.

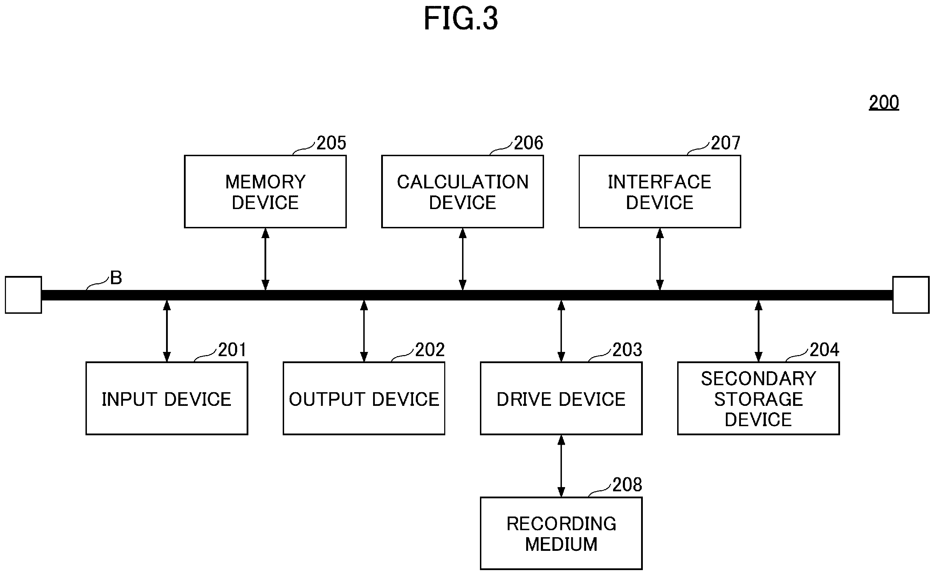

Next, the management device 200 according to the present embodiment will be described. FIG. 3 shows an example hardware structure of the management device 200.

The management device 200 according to the present embodiment is a computer including an input device 201, an output device 202, a drive device 203, a secondary storage device 204, a memory device 205, a calculation device 206, and an interface device 207, which are interconnected by a bus B**.**

The input device 201 is a device for inputting various information, and is implemented by, for example, a touch panel. The output device 202 is for outputting various information, and is implemented by, for example, a display (display device). The interface device 207 is used to connect with a network.

The management program implemented by the individual functional parts, which will be described later, is at least a part of various programs that control the management device 200. The management program is provided, for example, by distributing a storage medium 208, or by downloading the program from a network. For the storage medium 208 on which the management program is recorded, various types of storage media can be used, such as a storage medium that records information optically, electrically, or magnetically, a semiconductor memory that records information electrically, such as a ROM or a flash memory, and so forth.

Also, when the storage medium 208 on which the management program is recorded is set in the drive device 203, the management program is installed in the secondary storage device 204 from the storage medium 208 via the drive device 203. The management program downloaded from the network is installed in the secondary storage device 204 via the interface device 207.

The secondary storage device 204 stores the management program installed in the management device 200, and also stores various files, data, etc. required by the management device 200. The memory device 205 reads the management program from the secondary storage device 204 and stores it when the management device 200 is started. The calculation device 206 implements various processes, which will be described later, in accordance with the management program stored in the memory device 205.

Note that the assisting device 300 of the present embodiment may be a smartphone or tablet computer used by an operator of the excavator 100, a worker who works at a work site, a service person who maintains the excavator 100, or the like.

The assisting device 300 includes an image capturing device in addition to the devices shown in FIG. 3. The assisting device 300 acquires two-dimensional code image data using an image capturing device. Also, the assisting device 300 may be implemented such that the input device 201 is a touch panel or the like.

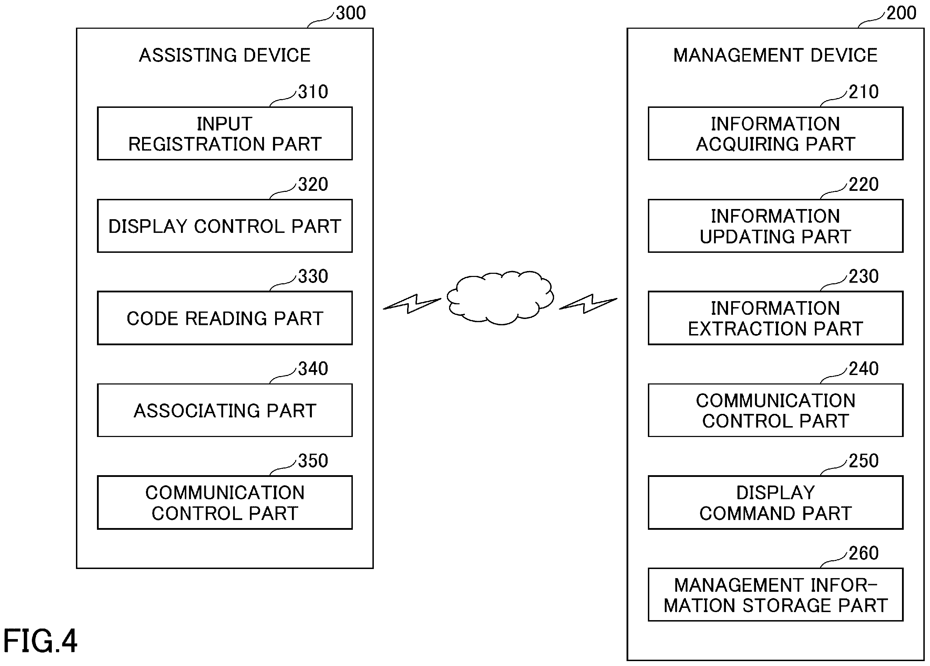

Next, with reference to FIG. 4**,** the functions of each device in the management system SYS of the present embodiment will be described. FIG. 4 explains the functions of the devices in the management system.

First, the functions of the management device 200 will be described. The management device 200 includes an information acquiring part 210, an information updating part 220, an information extraction part 230, a communication control part 240, a display command part 250, and a management information storage part 260. These parts are implemented as the calculation device 206 of the management device 200 reading and executing a management program stored in the secondary storage device 204 or the like.

The information acquiring part 210 of the present embodiment acquires various pieces of information transmitted from the excavator 100 and the assisting device 300. To be more specific, the information acquiring part 210 acquires, from the excavator 100, information indicating the result of the anomaly detection by the part 400, operation information acquired by the excavator 100, and the like. Also, the information acquiring part 210 acquires associated information, in which the machine number of the excavator 100 and the part identification information of the part 400n are associated with each other, from the assisting device 300.

The information updating part 220 updates the management information that the management information storage part 260 stores in storage devices such as the secondary storage device 204 or the like, in accordance with the information acquired by the information acquiring part 210. The management information mainly includes maintenance information, including the maintenance history of the excavator 100, etc.

The information extraction part 230 extracts the machine number of the excavator 100 and corresponding maintenance information.

The communication control part 240 controls the communication between the management device 200 and other devices. To be more specific, the communication control part 240 controls the communication between the management device 200 and the excavator 100 and the communication between the management device 200 and the assisting device 300.

The display command part 250 commands the assisting device 300 to display various information.

Next, the function of the assisting device 300 of the present embodiment will be described. The assisting device 300 of the present embodiment has an input registration part 310, a display control part 320, a code reading part 330, an associating part 340, and a communication control part 350. These parts are implemented by a calculation device included in the assisting device 300 reading and executing programs stored in a storage device included in the assisting device 300.

The input registration part 310 registers various inputs to the assisting device 300. To be more specific, for example, the input registration part 310 registers operations from the user of the assisting device 300.

The display control part 320 controls the display of the display device of the assisting device 300 in response to the operation received by the input registration part 310. Also, the display control part 320 controls the display on the display device of the assisting device 300 in accordance with display commands from the management device 200.

When the image capturing device of the assisting device 300 captures an image of a two-dimensional code, the code reading part 330 reads the information contained in the two-dimensional code from the image of the two-dimensional code. Note that the two-dimensional code according to the present embodiment may be, for example, a barcode, a QR code (registered trademark), or the like.

To be more specific, the code reading part 330 reads the machine number from the image of the two-dimensional code 101 of the excavator 100. Also, the code reading part 330 reads the part identification information from the image of the two-dimensional code 401 of the part 400n.

The associating part 340 associates the machine number read by the code reading part 330 and the part identification information with each other, generating associated information.

Also, when only one of the machine number of the excavator 100 and the part identification information of the part 400n is read, the associating part 340 of the present embodiment may temporarily hold the one piece of information already read, until it is associated with the other piece of information.

For example, if the code reading part 330 first reads the machine number alone, the associating part 340 temporarily holds the machine number until the part identification information is read. Also, if the code reading part 330 reads the part identification information first, the associating part 340 may temporarily hold the part identification information until the machine number is read. Also, when multiple pieces of part identification information are read in advance, the associating part 340 may hold the multiple pieces of part identification information in the form of a list.

Also, the associating part 340 may store both the part identification information and the machine number in association with each other after the part identification information and the machine number are both read. In other words, the associating part 340 does not have to perform the associating process until both the part identification information and the machine number are read. That is, when either the part identification information or the machine number alone is read, the associating part 340 may cause the display control part 320 to display on the display device a message indicating that the other information has not been read. Also, the associating part 340 may display a screen for allowing direct input of the part identification information or the machine number that has not been read, from the assisting device 300.

The communication control part 350 controls the communication between the assisting device 300 and other devices. To be more specific, the communication control part 350 controls the communication between the assisting device 300 and the management device 200.

Note that the parts of the assisting device 300 according to the present embodiment may be implemented by an application that is pre-installed in the assisting device 300. Also, this application may be downloaded from the management device 200.

Also, some of the functions of the assisting device 300 of the present embodiment may be implemented by a Web browser or the like that is pre-installed in the assisting device 300.

Furthermore, the assisting device 300 of the present embodiment may be a general smartphone. The smartphone may be one that is used by the operator of the excavator 100, a worker working at the work site, the service person performing maintenance on the excavator 100, etc. In this case, programs for implementing the individual functional parts of the assisting device 300 shown in FIG. 4 may be downloaded from the management device 200 or the like and stored in a storage device of the assisting device 300.

In other words, programs for implementing the functional parts of the assisting device 300 may be downloaded from the management device 200 or the like and installed in the assisting device 300. The assisting device 300 implements the functional parts shown in FIG. 4 by reading and executing programs stored in a storage device included in the assisting device 300 using a calculation device included in the assisting device 300.

According to the present embodiment, a smartphone user may be able to use services provided by the management device 200 by installing the programs that implement the functional parts of the assisting device 300 shown in FIG. 4 in the smartphone. In this case, the smartphone user is able to look up various pieces of information stored in the management device 200 and update the information.

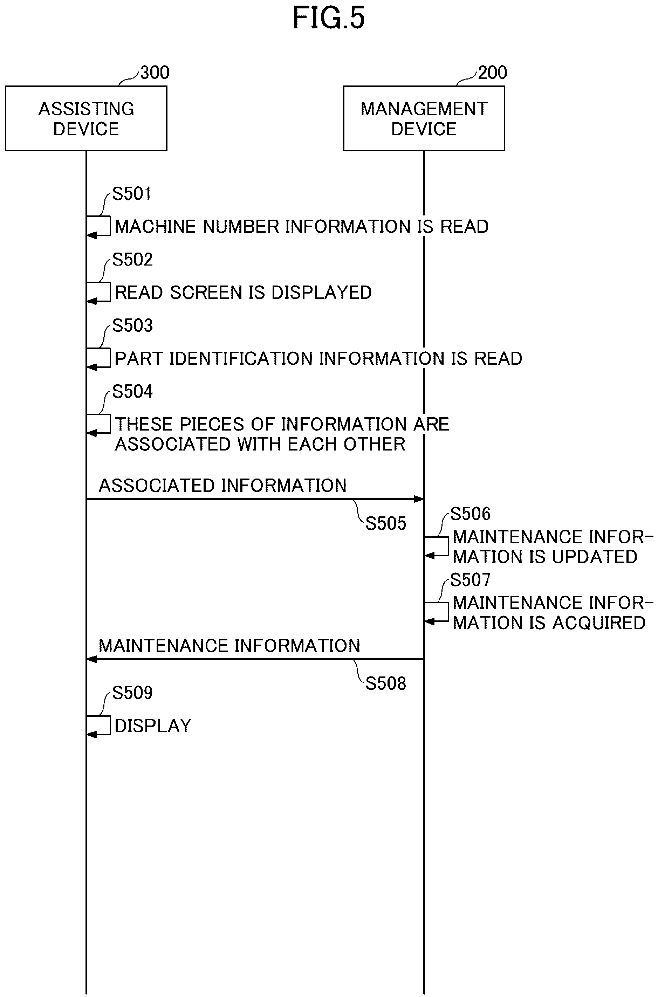

Next, with reference to FIG. 5**,** the operation of the management system SYS of the present embodiment will be described. FIG. 5 is a sequence diagram for explaining the operation of the management system according to the first embodiment.

In the management system SYS of the present embodiment, when the assisting device 300 is held over the two-dimensional code of the excavator 100, the code reading part 330 reads the machine number from the two-dimensional code 101 (step S501).

Next, in the assisting device 300, the display control part 320 displays a screen for allowing the display device of the assisting device 300 to read the part identification information (step S502).

Next, when the assisting device 300 is held over the two-dimensional code 401 of the part 400n, the code reading part 330 reads the part identification information of the part 400n from the two-dimensional code 401 (step S503).

Next, in the assisting device 300, the associating part 340 associates the machine number and the part identification information with each other (step S504). The communication control part 350 transmits the associated information including the machine number and the part identification information to the management device 200 (step S505).

Note that the associated information may include information indicating the date the machine number was read and information indicating the date the part identification information was read.

In the management device 200, when the communication control part 240 receives the associated information, the information acquiring part 210 acquires the associated information, and the information updating part 220 updates the maintenance information included in the management information (step S506).

In the information updating part 220, the management information storage part 260 adds information indicating that the part 400 has been replaced with the part 400n, among the maintenance information of the excavator 100 contained in the management information stored in the secondary storage device 204, etc. Also, the information updating part 220 may calculate the planned date for the next replacement of the part 400n, and include the calculated date in the maintenance information.

Next, in the management device 200, the information extraction part 230 extracts the maintenance information of the excavator 100 (step S507). The display command part 250 sends a command to display information about upcoming maintenance to the assisting device 300 (step S508).

When the assisting device 300 receives this display command, the display control part 320 displays information about the next maintenance on the display device (step S509).

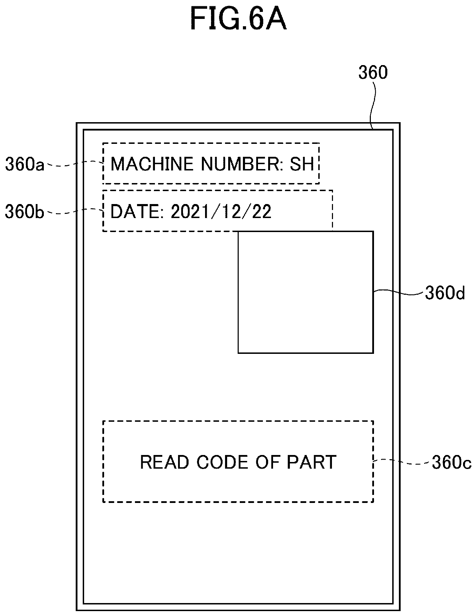

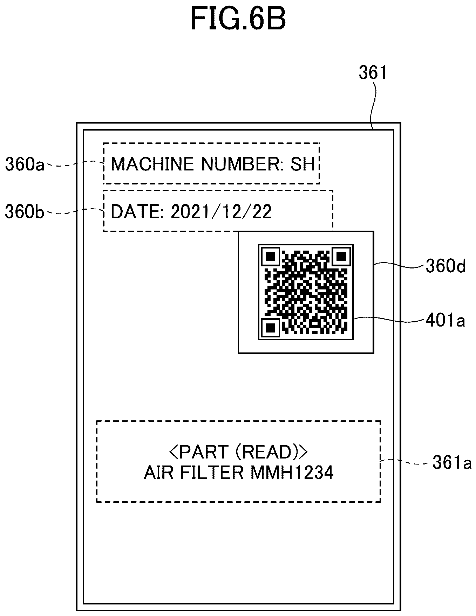

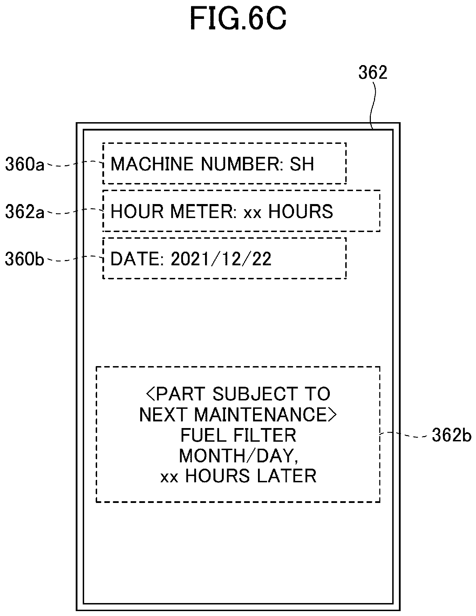

Next, with reference to FIG. 6A, FIG. 6B, and FIG. 6C, examples of displays using the assisting device 300 of the present embodiment will be described. FIG. 6A is a first diagram that shows an example of display on the assisting device according to the first embodiment. The screen 360 shown in FIG. 6A is an example of a screen displayed on the assisting device 300 in step S502 of FIG. 5.

The screen 360 includes display parts 360a, 360b, and 360c. The display part 360a displays the machine number read from the two-dimensional code 101 of the excavator 100. To be more specific, the machine number that identifies the excavator 100 is "SH."

On the display part 360b, information indicating the date the machine number was read is displayed. The date the machine number was read is, in other words, the date maintenance was performed (the date a part was replaced).

In the example of FIG. 6A, the display part 360b displays "2021/12/22," which is the date the machine number of the excavator 100 was read. In the display part 360c, a message to prompt reading of the part identification information (part code) is shown.

Also, a reading guide 360d for reading the two-dimensional code 401 is displayed on the screen 360.

When the two-dimensional code 401 of the part 400n is displayed in the reading guide 360d, the assisting device 300 reads the part identification information from the two-dimensional code 401.

FIG. 6B is a second diagram that shows an example of display on the assisting device according to the first embodiment. The screen 361 shown in FIG. 6B is an example of a screen displayed on the assisting device 300 when the assisting device 300 is held over the two-dimensional code 401 of the part 400n in step S503 of FIG. 5, and includes display parts 360a, 360b, and 361a. Also, a reading guide 360d is displayed on the screen 361.

On the screen 361, an image 401a of a two-dimensional code 401 is displayed in a part indicated by the reading guide 360d. The display part 361a displays part identification information read from two-dimensional code 401.

In the example of the screen 361, the display part 361a displays "air filter MMH1234," which indicates that among the parts of the excavator 100, "air filter MMH1234" will be replaced.

FIG. 6C is a third diagram that shows an example of display on the assisting device of the first embodiment. The screen 362 shown in FIG. 6C is an example of a screen displayed on the assisting device 300 in step S503 of FIG. 6C. The screen 362 includes display parts 360a, 360b, 362a, and 362b.

The display part 362a displays a value on an hour meter, included in the maintenance information. The hour meter value, in other words, is the operating time of the excavator 100.

In the display part 362b, information regarding the next maintenance is displayed. To be more specific, the display part 362b shows that the next part to be replaced is the fuel filter, and the time at which the fuel filter is to be replaced.

According to the present embodiment, the assisting device 300 is thus controlled to display information about the next maintenance, so that the service person who maintains the excavator 100 can know the next replacement part, the replacement time, etc. In other words, the present embodiment is able to help the service person to prepare a maintenance job plan.

Note that, according to the present embodiment, for example, if the part identification information is not read for a certain period of time after the screen 360 is displayed, the display of the screen 360 may be ended, or a screen that allows the user to select whether or not to save the machine number of the excavator 100 on a temporary basis may be displayed.

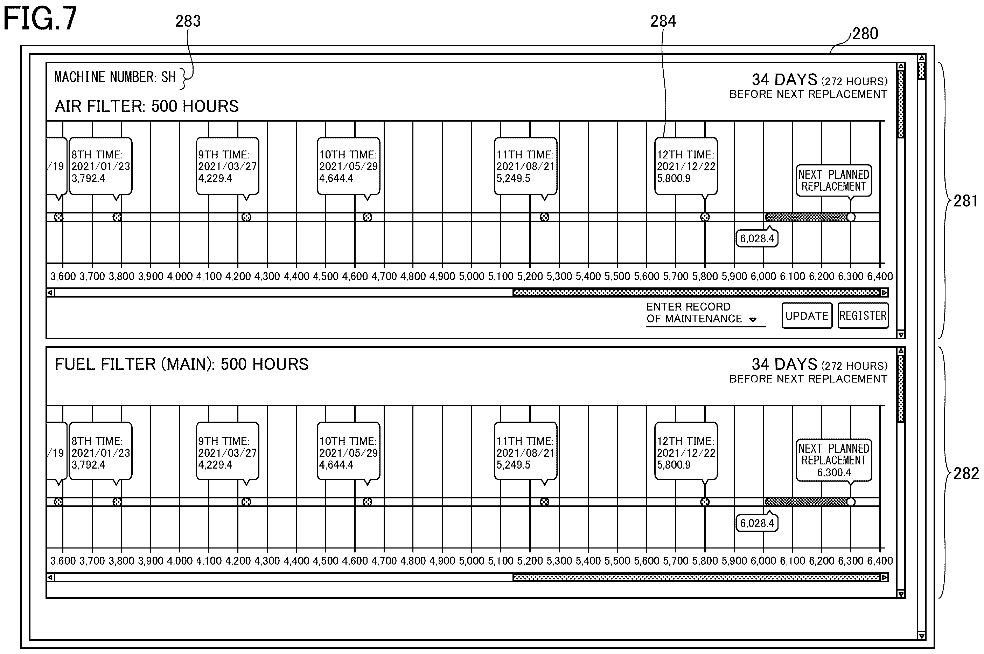

Next, with reference to FIG. 7, a display example of the management device 200 according to the present embodiment will be described. FIG. 7 explains an example of display on a management device.

The screen 280 shown in FIG. 7 is an example of a screen when maintenance information for the excavator 100 is displayed.

The screen 280 shows an example of part replacement history per part of the excavator 100. The screen 280 has display parts 281, 282, and 283. In the display part 281, information showing the replacement history of the air filter is displayed. In the display part 282, information showing the replacement history of the fuel filter is displayed. The machine number of the excavator 100 is displayed in the display part 283.

Note that in the management device 200, when the screen 280 is scrolled downward, information showing the replacement history of parts other than the air filter and fuel filter is also displayed.

When the management device 200 according to the present embodiment receives, from the assisting device 300, associated information in which the part identification information of the air filter and the machine number information of the excavator 100 are associated with each other, this associated information is reflected in the maintenance information. The screen 280 then shows a new history indicating that the air filter has been replaced.

In the example of FIG. 7, the date the air filter was last changed, "2021/12/22", is displayed in the display part 284.

Note that in the example of FIG. 7, the replacement history of each part of the excavator 100 is displayed as maintenance information of the excavator 100, but the present invention is by no means limited to this.

According to the present embodiment, when a part of the excavator 100 is replaced, if a two-dimensional code is also affixed to the part presently attached to the excavator 100 (the part to be replaced), the assisting device 300 may read the two-dimensional code of the part to be replaced. In this case, the maintenance information associated with the part to be replaced may be displayed on the display device of the assisting device 300, the display of the management device 200, or elsewhere.

The maintenance information associated with the part to be replaced may include part identification information of the part to be replaced, the date the part to be replaced was attached to the excavator 100, the reason for the replacement, and the like.

In this way, when a part of the excavator 100 is replaced, maintenance information about the part that is presently attached to the excavator 100 is displayed, so that the service person or others can know the part's replacement history in detail.

Also, if a two-dimensional code is affixed to a part that is presently attached to the excavator 100, this two-dimensional code may be read at any desired timing, whether the part is to be replaced or not, because it is useful to know information such as when the part was attached.

Thus, according to the present embodiment, when a part of the excavator 100 is replaced, the fact that the job is done is automatically reflected in the maintenance information, so that the service person does not need to input the details of the job into the management device 200. Therefore, according to the present embodiment, it is possible to prevent or substantially prevent a situation in which maintenance information is not updated due to human error, such as a service person forgetting to input information, so that the user of the management device 200 can know accurate maintenance information.

### (Second embodiment)

A second embodiment of the present disclosure will be described below with reference to the drawings. The second embodiment is different from the first embodiment in that the part identification information is read first and saved on a temporary basis. Therefore, in the following description of the second embodiment, only the differences from the first embodiment will be explained mainly. Parts and functions that are substantially the same as those of the first embodiment will be assigned the same reference codes or numerals as in the first embodiment, and their detailed explanation will be omitted.

According to the present embodiment, for example, it is assumed that the service person discards the packaging materials of the part 400n before he/she goes to the work site where the excavator 100 is situated, and takes only the part 400n itself to the work site.

In this case, the part identification information is read in advance before the part 400n's packaging material is discarded, and is associated with the machine number of the excavator 100 after the machine number is read at the work site.

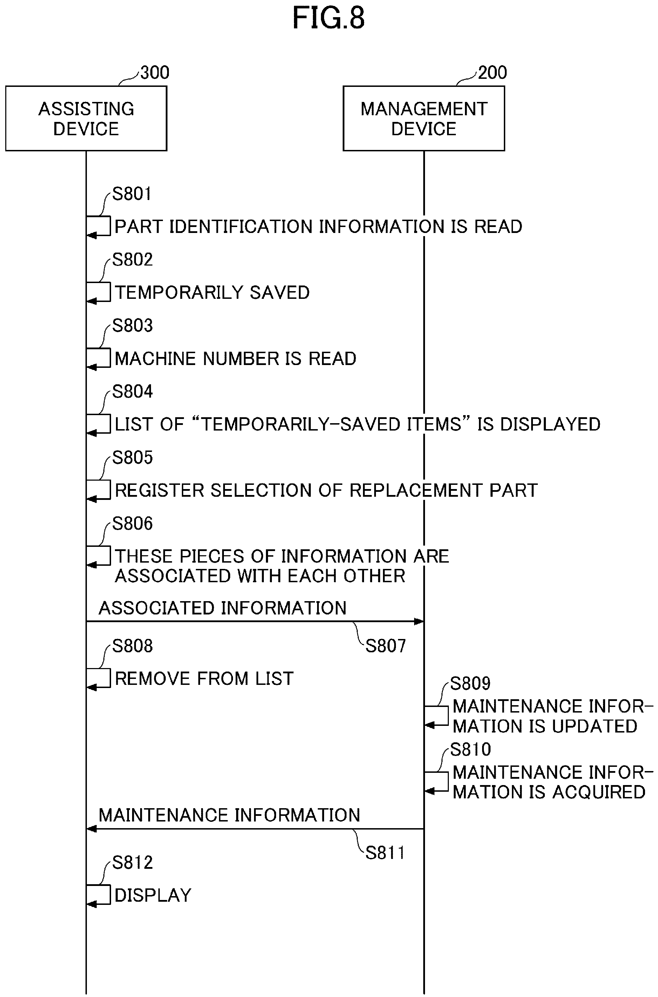

The operation of the management system SYS of the present embodiment will be described below with reference to FIG. 8. FIG. 8 is a sequence diagram for explaining the operation of the management system according to the second embodiment.

In the management system SYS of the present embodiment, when the assisting device 300 is held over the two-dimensional code 401 of the part 400n, the code reading part 330 reads part identification information from the two-dimensional code 401 (step S801). At this time, multiple pieces of part identification information may be read.

Next, in the assisting device 300, the input registration part 310 registers an operation for saving the part identification information temporarily, and the associating part 340 saves, temporarily, the part identification information read in step S801 (step S802).

To be more specific, if the part identification information is read before the machine number is read, the assisting device 300 may display, via the display control part 320, a screen for prompting the user to perform a temporary saving operation, whereby the part identification information that is read is saved on a temporary basis. When a temporary saving operation is performed on this screen, the assisting device 300 assumes that the operation to temporarily save the part identification information that is read has been registered, and the associating part 340 temporarily holds the part identification information.

Note that, according to the present embodiment, for example, if either or both of the part identification information and the machine number are unreadable, the unreadable information may be input directly from the assisting device 300. To be more specific, if the assisting device 300 fails to read a two-dimensional code due to damage of the two-dimensional code or similar factors, the assisting device 300 may then display an input screen for allowing input of the part identification information and the machine number. Also, if no two-dimensional code is affixed, an input screen for inputting part identification information and the machine number may be displayed in accordance with the user's operation of the assisting device 300.

Next, when the assisting device 300 is held over the two-dimensional code 101 of the excavator 100, the code reading part 330 reads the machine number (step S803).

Next, the display control part 320 of the assisting device 300 displays a list of the part identification information held by the associating part 340 as a list of temporarily saved items (step S804).

In other words, the assisting device 300 displays the list of temporarily saved items when the machine number of the excavator 100 is read.

Next, the input registration part 310 of the assisting device 300 accepts a selection of part identification information from the list of temporarily saved items (step S805).

Next, in the assisting device 300, the associating part 340 associates the selected part identification information with the machine number read in step S803 (step S806), and transmits the associated information to the management device 200 (step S807).

Next, the assisting device 300 removes the selected part identification information from the list of temporarily saved items (step S808). In other words, the assisting device 300 removes the part identification information that is associated with the machine number, from the list of temporarily saved items.

When the management device 200 receives the associated information, the management device 200 updates the maintenance information included in the management information (step S809).

The process from step S809 to step S812 is substantially the same as the process from step S506 to step S509 in FIG. 5**,** and therefore its description will be omitted.

Note that, in the example of FIG. 8, the part identification information is read before the machine number and temporarily saved in the assisting device 300, but this is by no means a limitation. The assisting device 300 may read the part identification information before the machine number, and transmit this part identification information to the management device 200 with terminal identification information for identifying the assisting device 300. Also, the management device 200 may temporarily save both the terminal identification information and the part identification information together.

In this case, when the assisting device 300 reads the machine number of the excavator 100, the assisting device 30 transmits the terminal identification information of the assisting device 300, with the machine number, to the management device 200. The management device 200 may extract the list of part identification information associated with the terminal identification information received together with the machine number, and transmit the extracted list of part identification information to the assisting device 300. The assisting device 300 may display this list of part identification information as a list of temporarily saved items.

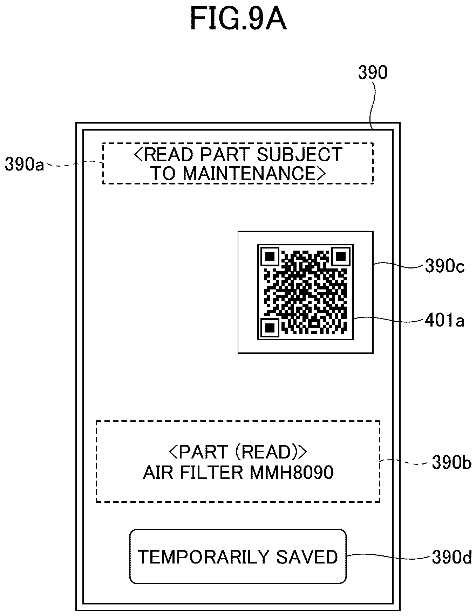

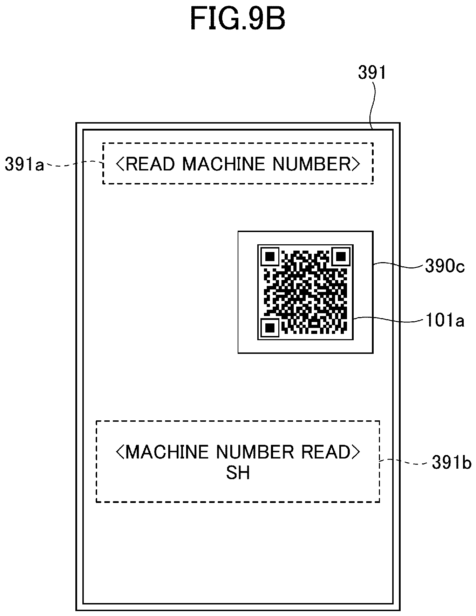

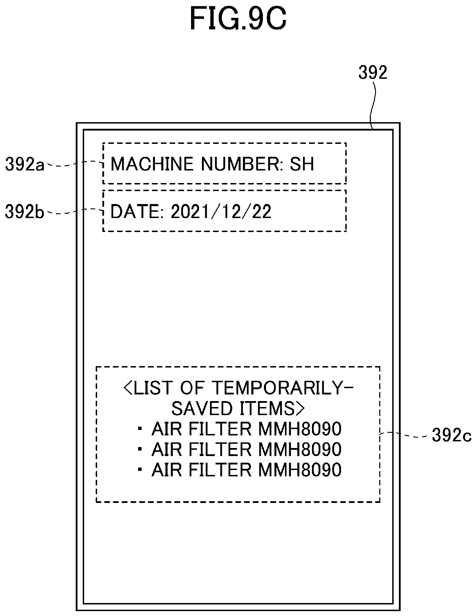

Next, examples of displays of the management device 200 according to the present embodiment will be described with reference to FIG. 9A, FIG. 9B, and FIG. 9C. FIG. 9A is a first diagram that shows an example of display on the assisting device of the second embodiment.

The screen 390 shown in FIG. 9A is an example of a screen displayed on the assisting device 300 when the assisting device 300 is held over the two-dimensional code 401 of the part 400n in step S802 of FIG. 8.

The screen 390 includes display parts 390a and 390b, a reading guide 390c, and an operation button 390d. A message indicating that the part identification information of the part 400n has been read is displayed in the display part 390a.

The display part 390b displays the part identification information read from the image 401a of the two-dimensional code 401 displayed in the reading guide 390c.

The operation button 390d is an operation button for instructing that the part identification information displayed in the display part 390b be temporarily saved. When the operation button 390d is operated on the screen 390 of the assisting device 300, the part identification information displayed in the display part 390b is saved on a temporary basis.

FIG. 9B is a second diagram that shows an example of display on the assisting device of the second embodiment. The screen 391 shown in FIG. 9B is an example of a screen displayed on the assisting device 300 when the assisting device 300 is held over the two-dimensional code 101 of the excavator 100 in step S803 in FIG. 8.

The screen 391 includes display parts 391a and 391b, and a reading guide 390c. A message indicating that the machine number (machine serial number, for example) has been read as machine identification information is displayed in the display part 391a. The display part 391b displays the machine number read from the image 101a of the two-dimensional code 101 displayed in the reading guide 390c.

In this way, with the assisting device 300 of the present embodiment, the screen 391 transitions to a screen 392 when the machine number is read.

FIG. 9C is a third diagram that shows an example of display on the assisting device of the second embodiment. FIG. 9C is an example of a screen displayed on the assisting device 300 in step S804 of FIG. 8.

The screen 392 includes display parts 392a, 392b, and 392c. The machine number read in step S803 is displayed in the display part 392a. The display part 392b displays information indicating the date the machine number was read. The display part 392c displays the list of temporarily saved items. In the example of FIG. 9C, the part identification information of three air filters is displayed in the display part 392c, which makes it clear that the part identification information of three air filters has been read.

When the assisting device 300 accepts an operation to select part identification information in the display part 392c, the machine number displayed in the display part 392a and the selected part identification information are associated with each other and transmitted to the management device 200. Then, the selected part identification information is removed from the display part 392c.

In this way, according to the present embodiment, it is possible to read and store the part identification information of the part 400n before the machine number is read. Therefore, according to the present embodiment, it is possible to read the part identification information of a part 400n in advance, unpackage the part 400n, and bring the part 400n alone to the work site where the excavator 100 is situated, thereby reducing the burden of part replacement of parts at the work site.

The present embodiment may prove effective when applied to parts such as air filters, fuel filters, oil filters, and hydraulic oil filters that need to be replaced on a regular basis due to continuous operation of the excavator 100, but the parts to which the present embodiment can be applied are by no means limited to these parts that need to be replaced regularly. Also, among the parts that need to be replaced regularly, the hydraulic oil filter is located in a pump chamber, the air filter is located in an intake chamber, and so on.

Although embodiments to carry out the present disclosure have been described above, the description given hereinabove by no means limit the present disclosure in any way, and a variety of alterations and improvements can be made within the scope of the present disclosure.

This application is based on and claims priority to Japanese Patent Application No. 2022-061038, filed March 31, 2022, the entire contents of which are incorporated herein by reference.

### Reference Signs List

- 1: lower traveling body
- 2: rotating mechanism
- 3: upper rotating body
- 30: controller
- 40: display device
- 100: excavator
- 210: management device
- 220: information acquiring part
- 230: information updating part
- 240: information extraction part
- 250: communication control part
- 300: assisting device
- 310: input registration part
- 320: display control part
- 330: code reading part
- 340: associating part
- 350: communication control part

## Claims

1. An excavator management system comprising:
an excavator on which a first predetermined image is affixed;
an assisting device for the excavator; and
a management device for the excavator,
wherein the assisting device includes a communication control part configured to transmit machine identification information of the excavator and part identification information of a part of the excavator in association with each other, to the management device, the machine identification information being read from the first predetermined image and the part identification information being read from a second predetermined image affixed to the part, and
wherein the management device includes a storage part configured to store the machine identification information and the part identification information in association with each other.

2. The excavator management system according to claim 1, wherein the assisting device further includes a display control part configured to display, on a display device, a screen for reading the part identification information, after the machine identification information is read.

3. The excavator management system according to claim 1, wherein the assisting device further includes a display control part configured to hold the part identification information temporarily when the part identification information is read before the machine identification information is read, and display a list of temporarily-saved part identification information when the machine identification information is read.

4. The excavator management system according to claim 3**,** wherein, when the communication control part of the assisting device registers a selection of at least one piece of part identification information from the list of the temporarily-saved part identification information, the communication control part of the assisting device transmits the selected part identification information and the machine identification information in association with each other to the management device.

5. The excavator management system according to any one of claim 1 to claim 4**,** wherein the management device includes a display command part configured to extract maintenance information associated with the machine identification information transmitted from the assisting device, and display the maintenance information on the assisting device.

6. The excavator management system according to claim 1**,** wherein the assisting device further includes a display control part configured to display, when one of the machine identification information of the excavator or the part identification information of the part is read, a message to indicate that the other one of the machine identification information or the part identification information has not been read yet, on a display device.

7. The excavator management system according to claim 1, wherein the assisting device further includes a display control part configured to display, when the assisting device fails to read at least one of the machine identification information of the excavator or the part identification information of the part, an input screen for allowing input of the at least one of the machine identification information or the part identification information that the assisting device failed to read.

8. The excavator management system according to claim 1,
wherein the first predetermined image is an image affixed to a body of the excavator or an image formed on a surface of the body of the excavator, and
wherein the second predetermined image is an image affixed to the part or a packaging material of the part, or an image formed on a surface of the part.

9. The excavator management system according to claim 1, wherein the first predetermined image and the second predetermined image are two-dimensional codes.

10. A method to be implemented by an excavator management system including:
an excavator on which a first predetermined image is affixed;
an assisting device for the excavator; and
a management device for the excavator, the method comprising:
controlling the assisting device to transmit machine identification information of the excavator and part identification information of a part of the excavator in association with each other, to the management device, the machine identification information being read from the first predetermined image and the part identification information being read from a second predetermined image affixed to the part, and
controlling the management device to store the machine identification information and the part identification information in association with each other.

11. A program for causing an assisting device for an excavator to transmit machine identification information of the excavator and part identification information of a part of the excavator in association with each other, to a management device of the excavator, the machine identification information being read from a first predetermined image affixed to the excavator and the part identification information being read from a second predetermined image affixed to the part.
